# EUROPEAN PATENT SPECIFICATION

(11) **EP 2 685 143 B1**
(45) Date of publication and mention of the grant of the patent: **17.05.2017**
(21) Application number: 12755107.5
(22) Date of filing: 01.03.2012
(51) Int. Cl.: F16K 11/044, F16K 31/04, B60H 1/00, F25B 41/04, F25B 13/00, F25B 27/00

(54) **CONTROL VALVE**
STEUERVENTIL
VANNE DE REGULATION

(30) Priority: 08.03.2011 JP 2011050100
(43) Date of publication of application: 15.01.2014
(73) Proprietor: TGK CO., Ltd., Tokyo 193-0942 (JP)
(72) Inventor: HIROTA, Hisatoshi, Hachioji-shi Tokyo 193-0942 (JP)
(74) Representative: Schröer, Gernot H.
(86) International application number: PCT/JP2012/001414
(87) International publication number: WO 2012/120845

(56) References cited:
- JP-A- 1 012 181
- JP-A- 2008 232 290
- JP-U- H0 482 707
- JP-U- 57 093 679
- US-A- 4 442 998
- US-A- 5 184 773
- US-A1- 2008 042 090

## Description

The present invention relates to a control valve and, in particular, a control valve suitable for switching a plurality of fluid passages through which working fluid flows.

In recent years the combustion efficiency of a vehicle provided with an internal-combustion engine has improved. This makes it hard for the cooling water, used as a heat source, to rise to a temperature required for the heating. At the same time, the utilization rate of an internal-combustion engine is low in a hybrid vehicle equipped with both an internal-combustion engine and an electric motor drive. This makes it harder for such the cooling water to be utilized. For an electric-powered car, there is no heat source coming from any internal-combustion engine at all. For this reason, proposed is an automotive air conditioner of heat pump type (see Patent Document 1, for instance). In this proposed automotive air conditioner of heat pump type, a cycle operation using a refrigerant is carried out not only for the cooling but also for the heating, and a vehicle's passenger compartment can be dehumidified and heated.

Such an automotive air conditioner as described above employs a refrigeration cycle including a compressor, an external heat exchanger, an evaporator, an internal heat exchanger and so forth. The functions of the external heat exchanger are switched between when the air conditioner is in a heating operation and when it is in a cooling operation. At the time the air conditioner is in a heating operation, the external heat exchanger functions as an evaporator. At this time, the internal heat exchanger radiates heat in a process where the refrigerant circulates in the refrigeration cycle, and the thus radiated heat heats air inside the passenger compartment. At the time the air conditioner is in a cooling operation, the external heat exchanger functions as a condenser. At this time, the refrigerant condensed by the external heat exchanger is evaporated by the evaporator and, the evaporative latent heat cools the air of the interior of the vehicle. In so doing, the air in the passenger compartment is also dehumidified. In order to switch the functions between the heating operation and the cooling operation, a plurality of refrigerant circulation passages are provided in the refrigeration cycle, and various types of control valves used to switch the flow of each refrigerant circulation passage are provided.

The document US 4,442,998 discloses an electromagnetic motor assembly for a valve unit which includes a cylindrical housing of magnetic material provided at its opposite ends with the first and second fitting faces, a solenoid coil wound around a bobbin and concentrically assembled within the housing, the solenoid coil being connected to an an electric power source. The motor assembly further includes a stationary core of magnetic material having a large diameter portion fixed to the first fitting face of the housing and a small diameter portion surrounded the solenoid coil through the bobbin, the small diameter portion of the stationary core being formed at the inner end thereof with one of an annular recess and an annular protection to be coupled within the recess with a predetermined clearance, an annular yoke member of magnetic materials fixed at its outer periphery to the second fitting face of the housing and having an inner periphery coaxial with the small diameter portion of the stationary core, a moveable core of magnetic material arranged between the stationary core and the yoke member and having an inner end facing to the inner end of the stationary core and an outer periphery radially spaced from the inner periphery of the yoke member with a predetermined annual clearance, the moveable core being formed at the inner end thereof with the other one of the annular recess and projection and being operatively connected to the flow control valve assembly, and a resilient member of biasing the moveable core towards its assembled position. Further, Japanese Unexamined Patent Application Publication (Kokai) No. Hei09-240266 comprises prior art.

Where many control valves are used in such an automotive air conditioner, the cost naturally increases and the problem of limited space for installation may occur. Thus it is desirable that the number of control valves and the cost of components used be as small as practicable. At the same time, while the number of control valves and the cost are suppressed, an excellent air-conditioning performance according to an operation state needs to be ensured.

A purpose of the present invention is to totally reduce the increased cost for the control valves used to switch a plurality of fluid passages through which working fluid flows.

In order to resolve the aforementioned problems, a control valve according to one embodiment of the present invention includes: a common body, having a first internal passage and a second internal passage, configured to contain a first valve for controlling an opening degree to regulate a flow of working fluid in the first internal passage and a second valve for controlling an opening degree to regulate a flow of working fluid in the second internal passage; a common actuator configured to electrically regulate the opening degrees of the first valve and the second valve; a valve actuating member configured to be driven by the actuator in a direction of axis line; a driven member integrally including a first valve element for opening and closing the first valve and a second valve element for opening and closing the second valve, the driven member being configured to be driven in opening and closing directions of the first valve and the second valve in a manner such that the driven member is operatively linked to the valve actuating member and displaceable relative to the valve actuating member in an integrated manner; a function switching mechanism configured to operatively link the valve actuating member and the driven member to each other, while the opening degree of the first valve or the second valve is under control, and configured to be capable of maintaining the other of the first valve and the second valve in a fully open state while the opening degree of one of the first valve and the second valve is under control; and a back pressure canceling structure configured to form a back pressure chamber between the driven member and the body and configured to simultaneously cancel an effect of fluid pressure acting on both the first valve element and the second valve element by delivering the working fluid of either the first internal passage or the second internal passage into the back pressure chamber. Further, the body has a first port, a second port, and a third port,
wherein the first internal passage is formed by a passage that joins the first port and the second port,
wherein the second internal passage is formed by a passage that joins the first port and the third port,
wherein a first valve hole is formed in a part of the first internal passage,
wherein a second valve hole is formed in a part of the second internal passage,
wherein the first valve hole, the second valve hole, and the valve actuating member are disposed coaxially,
the driven member including:
a valve portion configured such that the first valve element for regulating the opening degree of the first valve by moving toward and away from the first valve hole and the second valve element for regulating the opening degree of the second valve by moving toward and away from the second valve hole are integrally provided, the valve portion being placed between the first valve hole and the second valve hole;
a conduit portion configured to be formed connectedly in such a manner as to penetrate the valve portion, the conduit portion extending on one side of the direction of axis line; and
a partition member configured to be formed connectedly on an end of the conduit portion opposite to the valve portion, the back pressure chamber being formed between the partition member and the body. The control valve further comprises a sealing member provided on a sliding surface between the partition member and the body,
the functioning switching mechanism including a biasing member configured to bias the driven member and the actuating member in such a direction as to operatively link the driven member and the actuating member,
wherein a biasing force of the biasing member is set such that the biasing force of the biasing member is larger than a sliding force of the sealing member, whereby while the opening degree of the first valve or the second valve is under control, the driven member and the valve actuating member are mutually stopped and remain relatively displaceable in an integrated manner, and
wherein, while at least one of the first valve and the second valve is closed, the biasing member is deformed by a reaction force from the driven member, and an operation linkage between the driven member and the valve actuating member is released such that the driven member and the valve actuating member are displaceable relative to each other.

By employing this embodiment, a plurality of valves for regulating the respective opening degrees of a plurality of internal passages are provided and the plurality of valves are contained in a common body. And the plurality of valves are configured as a control valve (composite valve) driven by a common actuator to control the opening and closing thereof. The arrangement is such that while the flow rate of refrigerant is controlled by one of valves, the other of valves is in a fully open state where the flow rate of refrigerant is saturated. Thus, controlling the flow rate in one valve is practically not affected by the state of the other valve. In other words, the first valve and the second valve are so arranged that these valves do not have an effect on each other in terms of control. This can suppress the number of bodies and actuators used for a given number of valves. Furthermore, the first valve element and the second valve element are formed integrally with the driven member, so that the valve structure can be simplified and the control valve can be produced at lower cost. Also, the back pressure canceling structure, by which the effect of fluid pressure acting on both the first valve element and the second valve element is simultaneously cancelled, is provided. This suppresses the load to actuator caused by the fluid pressure. Hence, the compact size of the actuator and the electric power saving can be achieved.

The present invention reduces, as a whole, the increased cost for the valves used to switch a plurality of fluid passages through which working fluid flows.

FIG. 1 illustrates a system structure of an automotive air conditioner according to a first embodiment of the present invention;
FIGS. 2A to FIG. 2E are each a diagram for explaining an operation of an automotive air conditioner;
FIG. 3 is a cross-sectional view showing a structure and operation of a first control valve;
FIG. 4 is a cross-sectional view showing a structure and operation of a first control valve;
FIG. 5 is a cross-sectional view showing a structure and operation of a first control valve; and
FIG. 6 is a cross-sectional view illustrating a structure of a control valve according to a second embodiment.

The present invention will now be described in detail based on preferred embodiments with reference to the accompanying drawings.

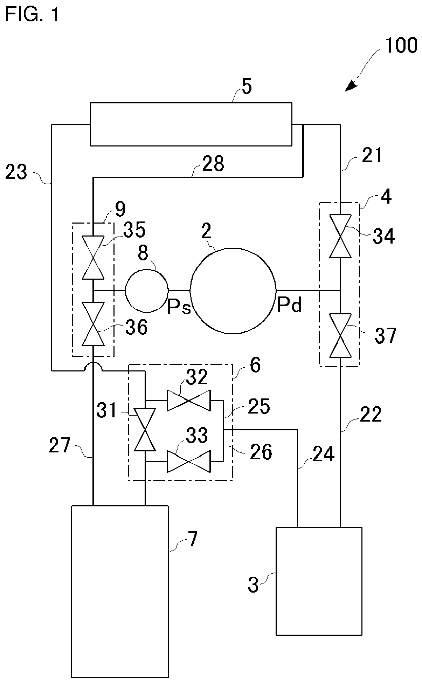

A description is first given of a first embodiment of the present invention. FIG. 1 illustrates a system structure of an automotive air conditioner according to the first embodiment of the present invention. The present embodiment is a constructive reduction to practice of the present invention where an automotive air conditioner according to the preferred embodiments is applied to an air conditioner of an electric-powered vehicle.

An automotive air conditioner 100 is provided with a refrigeration cycle (refrigerant circulation circuit) wherein a compressor 2, an internal condenser 3, an external heat exchanger 5, an evaporator 7, and an accumulator 8 are connected to each other by piping. The automotive air conditioner 100 is configured as a heat pump type air conditioner that performs air conditioning inside a vehicle's passenger compartment using the heat of refrigerant in a process where hydrochlorofluorocarbon (HFO-1234yf), which is used as the refrigerant, circulates within the refrigeration cycle while the refrigerant changes its state.

The automotive air conditioner 100 operates in such a manner as to switch a plurality of refrigerant circulation passages at the time of cooling and heating. The refrigeration cycle is configured such that the internal condenser 3 and the external heat exchanger 5 are operable in parallel with each other as a condenser. Also, the refrigeration cycle is configured such that the evaporator 7 and the external heat exchanger 5 are operable in parallel with each other as an evaporator. That is, a first refrigerant circulation passage, where the refrigerant circulates at the time of cooling, is provided. Also, a second refrigerant circulation passage, where the refrigerant circulates at the time of heating, is provided. And a third refrigerant circulation passage, where the refrigerant circulates at the time of dehumidification, is provided.

In the first refrigerant circulation passage, the refrigerant circulates in the following order: the compressor 2 → the external heat exchanger 5 → the evaporator 7 → the accumulator 8 → the compressor 2. In the second refrigerant circulation passage, the refrigerant circulates in the following order: the compressor 2 → the internal condenser 3 → the external heat exchanger 5 → the accumulator 8 → the compressor 2. In the third refrigerant circulation passage, the refrigerant circulates in the following order: the compressor 2 → the internal condenser 3 → the evaporator 7 → the accumulator 8 → the compressor 2. The flow of refrigerant flowing through the external heat exchanger 5 is opposite in direction between the first refrigerant circulation passage and the second refrigerant circulation passage.

More specifically, a passage connecting to a discharge chamber of the compressor 2 is branched off into two passages. A first passage 21, which constitutes one of the branched-off passages, connects to one of ports of the external heat exchanger 5. And a second passage 22, which constitutes the other of the branched-off passages, connects to an inlet of the internal condenser 3. The other of ports of the external heat exchanger 5 connects to an inlet of the evaporator 7 via a third passage 23. A fourth passage 24 connecting to an outlet of the internal condenser 3 is branched off into a first branched-off passage 25 and a second branched-off passage 26 in the downstream of the fourth passage 24. The first branched-off passage 25 and the second branched-off passage 26 connect respectively to the third passage 23. An outlet of the evaporator 7 connects to an inlet of the accumulator 8 via a fifth passage 27 (return passage). Also, a bypass passage 28 is branched off midway from the first passage 21, and this bypass passage 28 connects to the accumulator 8 and eventually connects to the compressor 2.

A first control valve 4 is provided at a branch point of the first passage 21 and the second passage 22. A second control valve 6 is provided at a branch point of the first branched-off passage 25 and the second branched-off passage 26. Further, a third control valve 9 is provided at a merging point of the fifth passage 27 and the bypass passage 28.

The compressor 2 is configured as a motor compressor that houses a motor and a compression mechanism within a housing. The compressor 2, which is driven by the current supplied from a not-shown battery, varies the refrigerant discharging capacity in response to the rotational speed of the motor.

The internal condenser 3, which is provided inside the vehicle's passenger compartment, functions as an auxiliary condenser that radiates heat off the refrigerant separately from the external heat exchanger 5. That is, the heat is radiated when the high-temperature and high-pressure refrigerant discharged from the compressor 2 passes through the internal condenser 3. The air led into the passenger compartment is heated up in a process where the air passes through the internal condenser 3.

The external heat exchanger 5, which is installed outside the passenger compartment, functions as an external condenser that radiates heat off the refrigerant passing through the inside during a cooling operation. On the other hand, the external heat exchanger 5 functions as an external evaporator that evaporates the refrigerant passing through the inside during a heating operation. When the external heat exchanger 5 functions as an evaporator, the low-temperature and low-pressure refrigerant having passed through an expansion device (i.e., a proportional valve 32 described later) evaporates as the refrigerant passes through the external heat exchanger 5.

The evaporator 7, which is installed inside the passenger compartment, functions as an internal evaporator that evaporates the refrigerant passing through the inside. That is, the low-temperature and low-pressure refrigerant having passed through an expansion device (i.e., a proportional valve 31 and a proportional valve 33 described later) evaporates as the refrigerant passes through the evaporator 7. The air led into the interior of a vehicle is cooled by the evaporative latent heat and then dehumidified. At this time, the air that has been cooled and dehumidified is heated in a process where the air passes through the internal condenser 3.

The accumulator 8 is an apparatus where the refrigerant sent out from the evaporator is stored while gas refrigerant and liquid refrigerant are separated from each other. The accumulator 8 has a liquid phase unit and a gas phase unit. Thus, even if a liquid refrigerant that exceeds an expected amount is delivered from the evaporator 7, such an extra liquid refrigerant can be stored in the liquid phase unit, so that the refrigerant in the gas phase unit can be sent to the compressor 2.

The first control valve 4 contains a proportional valve 34 (which corresponds to a "fourth proportional valve") and a proportional valve 37 (which corresponds to a "seventh proportional valve") in a common body. And the first control valve 4 is configured as a composite valve that drives the proportional valve 34 and the proportional valve 37 by a single actuator. The proportional valve 34 is a large-diameter valve and regulates the opening degree of the first passage 21. The proportional valve 37 is a large-diameter valve and regulates the opening degree of the second passage 22. In the present embodiment, a motor-operated valve, which is capable of regulating the opening degree of each valve, driven by a stepping motor is used as the first control valve 4. Instead, the first control valve 4 may be an electromagnetic valve capable of regulating the opening degree of each valve by supplying power to a solenoid. A concrete structure of the first control valve 4 will be discussed later.

The second control valve 6 is configured as a composite valve that contains a proportional valve 31 (which corresponds to a "first proportional valve"), a proportional valve 32 (which corresponds to a "second proportional valve"), and a proportional valve 33 (which corresponds to a "third proportional valve") in a common body. The proportional valve 31 and the proportional valve 32 are driven by a common actuator, and the proportional valve 33 is driven by another actuator. The proportional valve 31 is provided between a merging point with the first branched-off passage 25 in the third passage 23 and a merging point with the second branched-off passage 26 in the third passage 23.

The proportional valve 31 is a small-diameter valve and regulates the opening degree of the third passage 23. The proportional valve 32 is a small-diameter valve and regulates the opening degree of the first branched-off passage 25. The proportional valve 33 is a small-diameter valve and regulates the opening degree of the second branched-off passage 26. All of these proportional valves 31, 32 and 33 each functions as an expansion device as well. In the present embodiment, a motor-operated valve, which is capable of regulating the opening degree of each valve, driven by a stepping motor is used as the second control valve 6. Instead, the second control valve 6 may be an electromagnetic valve capable of regulating the opening degree of each valve by supplying power to a solenoid.

A third control valve 9 contains a proportional valve 35 (which corresponds to a "fifth proportional valve") and a proportional valve 36 (which corresponds to a "sixth proportional valve") in a common body. And the third control valve 9 is configured as a composite valve that drives the proportional valve 35 and the proportional valve 35 by a single actuator. The proportional valve 35 is a large-diameter valve and regulates the opening degree of the bypass passage 28. The proportional valve 36 is a large-diameter valve and regulates the opening degree of the fifth passage 27. In the present embodiment, a motor-operated valve, which is capable of regulating the opening degree of each valve, driven by a stepping motor is used as the third control valve 9. Instead, the third control valve 9 may be an electromagnetic valve capable of regulating the opening degree of each valve by supplying power to a solenoid.

The automotive air conditioner 100 configured as described above is controlled by a not-shown control unit. The control unit computes a controlled variable of each actuator in order to attain a room temperature set by a driver or a passenger of the vehicle and then outputs a control signal to the drive circuit of each actuator. The control unit determines the controlled variables, such as a valve opening degree and an open/close state of each valve, based on predetermined external information that has been detected by various sensors, and then supplies current to each actuator so as to realize the controlled variable. Here, the predetermined external information includes temperatures inside and outside the passenger compartment and the air-blowout temperature of the evaporator 7, for instance. Since, in the present embodiment, the stepping motor is used as the actuator, the control unit outputs a control pulse signal to the stepping motor to realize the controlled variable of each control valve. Through the control performed by the control unit, the compressor 2 introduces the refrigerant, having a suction pressure Ps, via a suction chamber, and compresses this refrigerant so as to be discharged as the refrigerant having a discharge pressure Pd. In the present embodiment, a plurality of temperature sensors are installed to achieve the above control. Here, the plurality of temperature sensors are used to detect the temperatures at the outlet of the internal condenser 3, one of ports of the external heat exchanger 5, the other of ports of the external heat exchanger 5, and the inlet and the outlet of the evaporator 7, respectively.

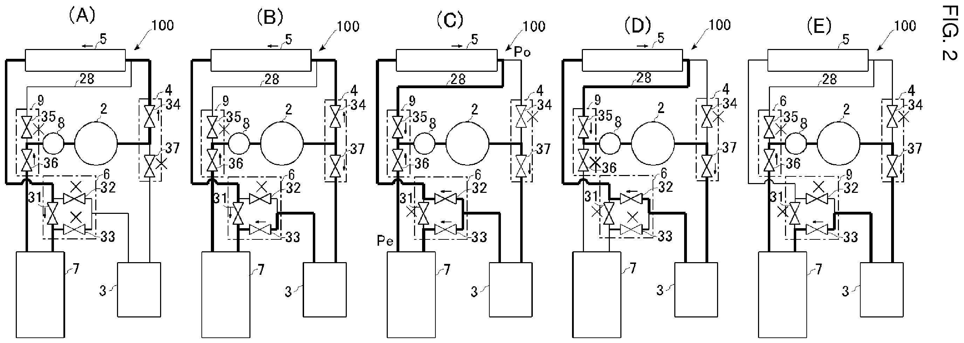

A description is now given of an operation of the refrigeration cycle in the present embodiment. FIGS. 2A to FIG. 2E are each a diagram for explaining an operation of the automotive air conditioner. FIG. 2A shows a state during a special cooling operation. FIG. 2B shows a state during a normal cooling operation. FIG. 2C shows a state during a specific heating operation. FIG. 2D shows a state during a normal heating operation. FIG. 2E shows a state during a special heating operation. Note here that the "special cooling operation" is an operating state or mode in which the internal condenser 3 is disabled in a cooling operation. The "specific heating operation" is an operating state or mode in which the dehumidifying capability in particular is enhanced in a heating operation. The "special heating operation" is an operating state or mode in which the external heat exchanger 5 is disabled. The bold lines and arrows in FIGS. 2A to 2E indicate the flow of refrigerant, whereas "×" in FIGS. 2A to 2E indicates that the flow thereof is being shut off.

As shown in FIG. 2A, the proportional valve 34 is open and the proportional valve 37 is closed in the first control valve 4 during a special cooling operation. Also, the proportional valve 31 is open, and both the proportional valve 32 and the proportional valve 33 are closed in the second control valve 6. Also, the proportional valve 35 is closed and the proportional valve 36 is open in the third control valve 9. Thereby, the first refrigerant circulation passage is opened, and both the second refrigerant circulation passage and the third refrigeration passage are shut off. Thus, the refrigerant discharged from the compressor 2 is led to the evaporator 7 by way of the external heat exchanger 5. At this time, the external heat exchanger 5 functions as an external condenser.

In other words, a high-temperature and high-pressure gaseous refrigerant discharged from the compressor 2 is condensed by passing through the external heat exchanger 5. Then the refrigerant, which has passed through the external heat exchanger 5, is adiabatically expanded at the proportional valve 31 so as to become a low-temperature and low-pressure gas-liquid two-phase refrigerant. This two-phase refrigerant is led into the evaporator 7. The refrigerant led into the inlet of the evaporator 7 evaporates in a process of passing through the evaporator 7, thereby cooling air inside the passenger compartment. The refrigerant led out from the evaporator 7 enters the accumulator 8 by way of the proportional valve 36. The control unit controls the opening degree of the proportional valve 31, based on the temperature at an outlet side of the external heat exchanger 5, so that the supercooling degree at the outlet side thereof can be suitable.

As shown in FIG. 2B, both the proportional valve 34 and the proportional valve 37 are open in the first control valve 4 during a normal cooling operation. Also, both the proportional valve 31 and the proportional valve 33 are open, and the proportional valve 32 is closed in the second control valve 6. Also, the proportional valve 35 is closed and the proportional valve 36 is open in the third control valve 9. Thereby, both the first refrigerant circulation passage and the third refrigerant circulation passage are opened, and the second refrigerant circulation passage is shut off. Thus, on one hand, the refrigerant discharged from the compressor 2 is led to the evaporator 7 by way of the external heat exchanger 5. On the other hand, the refrigerant discharged from the compressor 2 is led to the evaporator 7 by way of the internal condenser 3. At this time, the external heat exchanger 5 functions as an external condenser.

In other words, a high-temperature and high-pressure gaseous refrigerant discharged from the compressor is condensed by passing through the auxiliary condenser 3, on one hand, and passing through the external heat exchanger 5, on the other hand. Then the refrigerant, which has passed through the internal condenser 3, is adiabatically expanded at the proportional valve 33 so as to become a low-temperature and low-pressure gas-liquid two-phase refrigerant. This two-phase refrigerant is led into the evaporator 7. Also, the refrigerant, which has passed through the external heat exchanger 5, is adiabatically expanded at the proportional valve 31 so as to become a low-temperature and low-pressure gas-liquid two-phase refrigerant. This two-phase refrigerant is led into the evaporator 7. Then the refrigerant evaporates in a process of passing through the evaporator 7, thereby cooling air inside the passenger compartment. At this time, the refrigerant led out from the evaporator 7 enters the compressor 2 by way of the accumulator 8. The control unit controls the opening degree of the proportional valve 33, based on the temperature at an outlet side of the internal condenser 3, so that the supercooling degree at the outlet side thereof can be suitable. Also, the control unit controls the opening degree of the proportional valve 31, based on the temperature at the outlet side of the external heat exchanger 5, so that the supercooling degree at the outlet side thereof can be suitable.

As shown in FIG. 2C, the proportional valve 34 is closed and the proportional valve 37 is open in the first control valve 4 during a specific heating operation. Also, the proportional valve 31 is closed, and both the proportional valve 32 and the proportional valve 33 are open in the second control valve 6. Also, both the proportional valve 35 and the proportional valve 36 are open in the third control valve 9. Thereby, the first refrigerant circulation passage is shut off, and both the second refrigerant circulation passage and the third refrigeration passage are opened. Thus, the refrigerant discharged from the compressor 2 is condensed at the internal condenser 3. Then, the condensed refrigerant is led to the external heat exchanger 5, on one hand, and is also led to the evaporator 7, on the other hand. At this time, the external heat exchanger 5 functions as an external evaporator.

In other words, a high-temperature and high-pressure gaseous refrigerant discharged from the compressor 2 is condensed by passing through the internal condenser 3. The refrigerant led out from the internal condenser 3 is adiabatically expanded at the proportional valve 32, on one hand, so as to become a low-temperature and low-pressure gas-liquid two-phase refrigerant. This two-phase refrigerant is evaporated when it passes through the external heat exchanger 5. The refrigerant led out from the external heat exchanger 5 is led into the accumulator 8 by way of the proportional valve 35. Also, the refrigerant led out from the internal condenser 3 is adiabatically expanded at the proportional valve 33, on the other hand, so as to become a low-temperature and low-pressure gas-liquid two-phase refrigerant. This two-phase refrigerant is evaporated when it passes through the evaporator 7. The refrigerant led out from the evaporator 7 is led into the accumulator 8 by way of the proportional valve 36.

At this time, the control unit suitably regulates the ratio between the evaporation amount of refrigerant in the external heat exchanger 5 and the evaporation amount of refrigerant in the evaporator 7, for the purpose of properly performing the heat absorption by the external heat exchanger 5 and the dehumidification by the evaporator 7. In so doing, the ratio between the evaporation amounts thereof in these evaporators, namely the external heat exchanger 5 and the evaporator 7, is controlled according to the ratio between the opening degree of the proportional valve 32 and the opening degree of the proportional valve 33. The control unit regulates the opening degree of the proportional valve 32 and the opening degree of the proportional valve 33 so that the supercooling degree at the outlet side of the internal condenser 3 is a preset value SC. At the same time, the control unit controls the evaporation amounts of those two evaporators by regulating the valve opening ratio between the opening degrees of the proportional valve 32 and the proportional valve 33. In so doing, the control unit performs control such that the temperature at the outlet side of the evaporator 7 can be kept in a proper range in order that the evaporator 7 will not freeze.

Also, while one of the proportional valve 35 and the proportional valve 36 in the third control valve 9 is being kept at a fully open state, the control unit regulates the opening degree of the other thereof. When, in the present embodiment, the temperature of the evaporator 7 is lower than the temperature of the external heat exchanger 5, the opening degree of the proportional valve 35 is controlled while the proportional valve 36 is set to a fully open state. When, on the other hand, the temperature of the external heat exchanger 5 is lower than the temperature of the evaporator 7, the opening degree of the proportional valve 36 is controlled while the proportional valve 35 is set to a fully open state.

If, for example, the temperature of the evaporator 7 is lower than the temperature of the external heat exchanger 5, as in the former case, and if superheat occurs on the outlet side of the external heat exchanger 5, control will be performed such that the superheat is brought close to a preset value (zero or a small proper value) by throttling the opening degree of the proportional valve 35. In such a case, the heat absorbing amount from outside in the external heat exchanger 5 is regulated by a throttled state of the proportional valve 35. In other words, the opening degree of the proportional valve 35 is throttled while the proportional valve 36 is kept at a fully open state, so that a pressure difference (ΔP=Po-Pe) between an evaporation pressure Po of the external heat exchanger 5 and a pressure Pe at the outlet of the evaporator 7 becomes proper. Hence, the ratio between the amount of circulating refrigerant to be evaporated at the external heat exchanger 5 and the amount thereof to be evaporated at the evaporator 7 can be regulated. That is, as the pressure difference ΔP becomes large, the amount thereof to be evaporated at the external heat exchanger 5 becomes relatively small (equivalently, the amount thereof to be evaporated at the evaporator 7 becomes relatively large). Conversely, as the pressure difference ΔP becomes small, the amount thereof to be evaporated at the external heat exchanger 5 becomes relatively large (equivalently, the amount thereof to be evaporated at the evaporator 7 becomes relatively small). The control unit appropriately regulates the pressure difference ΔP by controlling the opening degree of the proportional valve 35 in accordance with the superheat occurring on the outlet side of the external heat exchanger 5. Thereby, a dehumidification function during a specific heating operation can be ensured. Note here that the presence/absence of superheat and the level of superheat at the outlet side of the external heat exchanger 5 can be identified by detecting the temperatures at the inlet side and the outlet side of the external heat exchanger 5.

If, conversely, the temperature of the external heat exchanger 5 is lower than the temperature of the evaporator 7, as in the latter case, and if superheat occurs on the outlet side of the evaporator 7, control will be performed such that the superheat is brought close to a preset superheat (zero or a small proper value) by throttling the opening degree of the proportional valve 36. In other words, the opening degree of the proportional valve 36 is throttled while the proportional valve 35 is kept at a fully open state, so that a pressure difference (ΔP=Pe-Po) between the pressure Pe at the outlet of the evaporator 7 and the evaporation pressure Po of the external heat exchanger 5 becomes proper. Thereby, the dehumidification function during a specific heating operation can be ensured. Note here that the presence/absence of superheat and the level of superheat at the outlet side of the evaporator 7 can be identified by detecting the temperatures at the inlet side and the outlet side of the evaporator 7.

As shown in FIG. 2D, the proportional valve 34 is closed and the proportional valve 37 is open in the first control valve 4 during a normal heating operation. Also, both the proportional valve 31 and the proportional valve 33 are closed, and the proportional valve 32 is open in the second control valve 6. Also, the proportional valve 35 is open and the proportional valve 36 is closed in the third control valve 9. Thereby, both the first refrigerant circulation passage and the third refrigerant circulation passage are shut off, and the second refrigerant circulation passage is opened. Thus, the refrigerant discharged from the internal condenser 3 is led to the external heat exchanger 5. At this time, no refrigerant is supplied to the evaporator 7. Thus the evaporator 7 practically does not function as such. As a result, the external heat exchanger 5 only functions as an evaporator. The control unit controls the opening degree of the proportional valve 32, based on the temperature at the outlet side of the internal condenser 3, so that the supercooling degree at the outlet side thereof can be suitable.

As shown in FIG. 2E, the proportional valve 34 is closed and the proportional valve 37 is open in the first control valve 4 during a special heating operation. Also, both the proportional valve 31 and the proportional valve 32 are closed, and the proportional valve 33 is open in the second control valve 6. Also, the proportional valve 35 is closed and the proportional valve 36 is open in the third control valve 9. Thereby, both the first refrigerant circulation passage and the second refrigerant circulation passage are shut off, and the third refrigerant circulation passage is opened. Thus, the refrigerant discharged from the internal condenser 3 is led to the evaporator 7. That is, the refrigerant bypasses the external heat exchanger 5 and therefore the external heat exchanger 5 practically does not function as such. The refrigerant led into the evaporator 7 evaporates in a process of passing through the evaporator 7, thereby dehumidifying air inside the passenger compartment. Such a specific air conditioning operation functions effectively when it is difficult to absorb heat from outside, such as when the vehicle is in extremely cold environments.

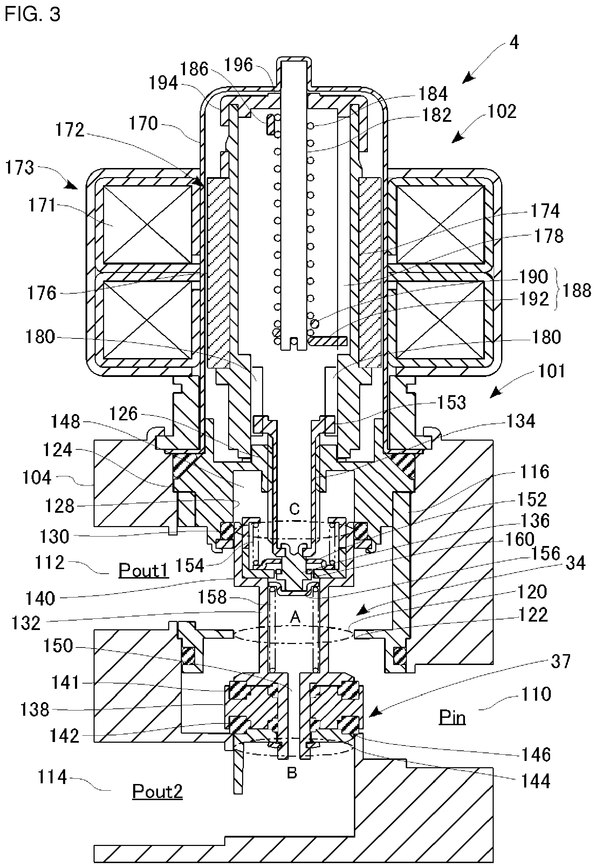

A description is now given of a concrete structure of the control valve according to the present embodiment. FIG. 3 to FIG. 5 are each a cross-sectional view showing a structure and operation of the first control valve 4. As shown in FIG. 3, the first control valve 4 is constituted as a motor-operated valve of stepping motor driven type and is configured by integrally assembling a valve unit 101 and a motor unit 102. The valve unit 101 is configured such that the proportional valve 34 of large diameter and the proportional valve 37 of large diameter are coaxially housed in a bottomed cylindrical body 104. The first control valve 4 is configured, as a composite valve, such that while one of the proportional valve 34 and the proportional valve 37 is being kept at a fully open state, the opening degree of the other thereof is regulated at a preset opening level.

A lead-in port 110 is provided at one side of the body 104, whereas a first lead-out port 112 and a second lead-out port 114 are provided at the other side thereof along the vertical direction. The lead-in port 110 communicates with the discharge chamber of the compressor 2. The first lead-out port 112 communicates with the first passage 21, and the second lead-out port 114 communicates with the second passage 22. That is, a first internal passage, joining the lead-in port 110 to the first lead-out port 112, and a second internal passage, joining the lead-in port 110 to the second lead-out port 114, are formed in the body 104.

A cylindrical partition member 116 is disposed in an upper half of the body 104. The partition member 116 is concentrically assembled to the body 104 through the medium of a sealing member. A lower end of the partition member 116 forms a valve hole 120. Also, a valve seat 122 is formed by a lower-end opening end edge on the valve hole 120. A communication hole, which communicates the inside and the outside of the partition member 116 is provided in a surface opposite to the first lead-out port 112 in the partition member 116.

A stepped cylindrical partition member 124 is disposed at an upper end of the body 104. The partition member 124 separates the interior of the valve unit 101 from the interior of the motor unit 102. A bearing part 126 having a circular boss shape is provided in an upper-end center of the partition member 124. The bearing part 126 has an internal thread on an inner circumferential surface of the bearing part 126, and an outer circumferential surface thereof functions as a sliding bearing. The inner circumferential surface of the partition member 124 forms a guiding passage 128, and an O-ring 130 serving as a sealing member is fitted on the lower end of the partition member 124.

A driven member 132, a valve actuating member 134, and a transmitting member 136 are disposed coaxially inside the body 104. The driven member 132, which is of a stepped cylindrical shape, is disposed such that a reduced diameter portion in a central part of the driven member 132 in a direction of axis line penetrates the valve hole 120. The reduced diameter portion of the driven member 132 extends across the first internal passage. A common valve element 138 is provided at a lower end of the driven member 132, and a partition member 140 is provided at an upper end thereof. That is, the common valve element 138 is disposed in a pressure chamber that communicates with the lead-in port 110 disposed upstream of the valve hole 120. In contrast, the partition member 140 is disposed in a position near the motor unit 102 in the first internal passage, namely in a pressure chamber that communicates with the first lead-out port 112 downstream of the valve hole 120, and the partition member 140 is slidably supported by the partition member 124.

The common valve element 138 is of a stepped cylindrical shape. A first valve element 141 is fitted on an upper end of the common valve element 138, and a second valve element 142 is fitted on a lower end thereof. The first valve element 141 and the second valve element 142 are each formed of a ring-shaped elastic body (rubber in the present embodiment). A valve hole 144 is provided in a passage that joins the lead-in port 110 to the second lead-out port 114, and a valve seat 146 is formed by an upper-end opening end edge on the valve hole 144. That is, the common valve element 138 is placed between the valve hole 120 and the valve hole 144. The first valve element 141 regulates the opening degree of the proportional valve 34 by moving toward and away from the valve seat 122. On the other hand, the second valve element 142 regulates the opening degree of the proportional valve 37 by moving toward and away from the valve seat 146.

A plurality of legs (only one of these legs shown in FIG. 3), which slide along and are supported by the valve hole 144, extend in a lower end of the common valve element 138. In other words, the driven member 132 is configured such that a plurality of legs at the lower end of the driven member 132 slide along the valve hole 144 and such that the partition member 140 at an upper end thereof slide along the guiding passage 128. Thereby, the driven member 132 can stably operate in the direction of axis line. A back pressure chamber 148 is formed between the partition member 140 and the partition member 124. Also, a communication path 150, which runs through the common valve element 138 in the direction of axis line, is formed. A section of the common valve element 138, which forms the communication path 150, and the reduced diameter portion of the driven member 132 constitute a conduit portion. And this conduit portion communicates between the second lead-out port 114 and the back pressure chamber 148. With this structure, the back pressure chamber 148 is constantly filled with a fluid having a downstream-side pressure Pout2 led out from the second lead-out port 114.

In the present embodiment, an effective diameter A of the valve hole 120, an effective diameter B of the valve hole 144, and an effective diameter C of the guiding passage 128 (more precisely C being the inside diameter of the O-ring130) are set equal to each other. Thus, the effect of the refrigerant pressure acting on the common valve element 138 is cancelled. In particular, provision of the O-ring130 ensures the sealing property of a sliding portion in the partition member 140 and also prevents foreign particles or the like from being trapped in the sliding portion.

A spring support member 152 and the transmitting member 136 are coaxially inserted inside the partition member 140 of the driven member 132. The spring support member 152 is of a disk shape, and the transmitting member 136 penetrates a central part of the spring support member 152. A spring 154, which functions as a "biasing member", is set between an upper-end opening of the partition member 140 and the spring support member 152. Also, a disk-shaped spring support member 156 is inserted inside the reduced diameter portion of the driven member 132. A spring 158, which functions as a "biasing member", is set between the common valve element 138 and the spring support member 156.

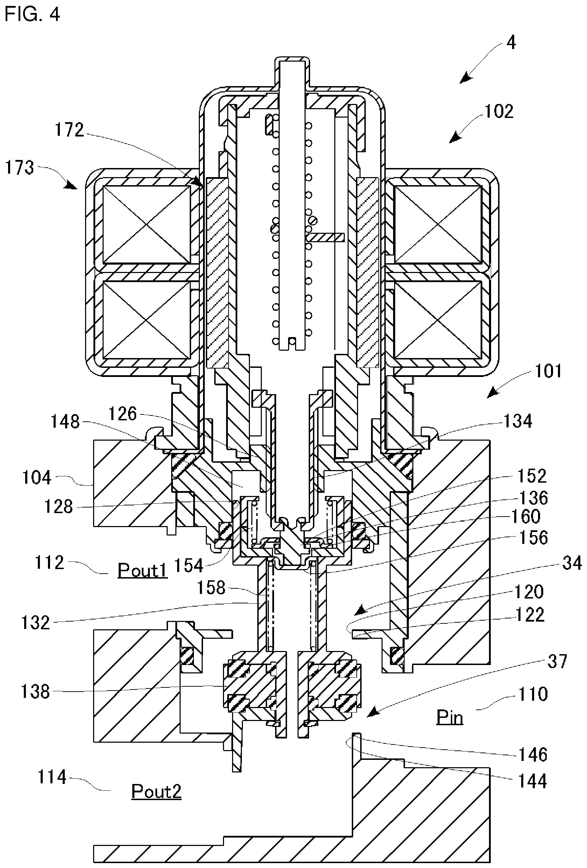

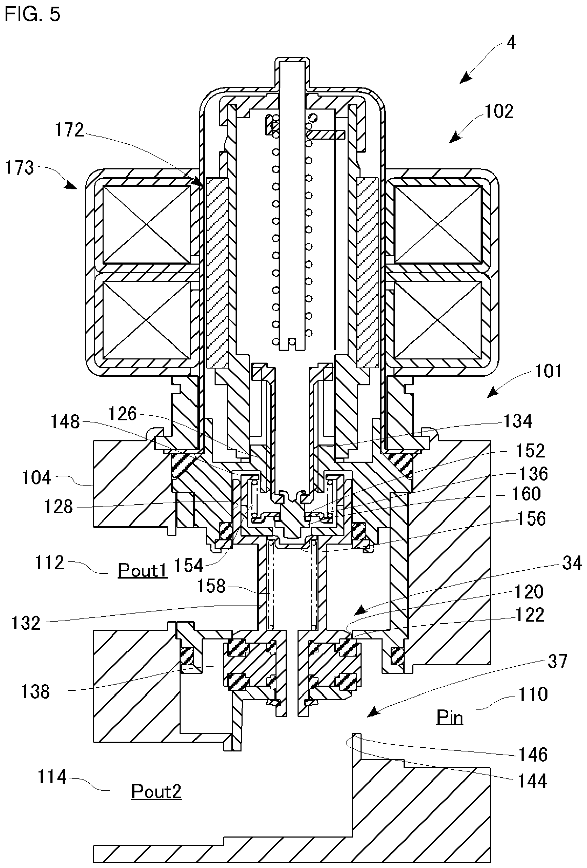

The valve actuating member 134 and the driven member 132 are configured such that the valve actuating member 134 and the driven member 132 can be operatively coupled or linked (operation-linked) to each other with the transmitting member 136 disposed between the valve actuating member 134 and the driven member 132. That is, an upper end of the transmitting member 136 penetrates a bottom of the valve actuating member 134, and a tip of the transmitting member 136 is swaged outwardly so as to be coupled to the valve actuating member 134. A stopper 160, which protrudes radially outward, is provided on a side of the transmitting member 136. The stopper 160 is stopped by the spring support member 152, so that the valve actuating member 134 and the driven member 132 are configured in such a manner as to move together in an upward direction. Also, a lower end of the transmitting member 136 is stopped by the spring support member 156, so that the valve actuating member 134 and the driven member 132 are configured in such a manner as to move together in a downward direction. When both the proportional valve 34 and the proportional valve 37 are open, the driven member 132 and the valve actuating member 134 are integrally displaceable in a stretched state by the biasing forces of the springs 154 and 158 (see FIG. 4). When either the proportional valve 34 or the proportional valve 37 is closed, the driven member 132 and the valve actuating member 134 are displaceable relative to each other in the direction of axis line (see FIG. 3 and FIG. 5).

The spring loads of the springs 154 and 158 are each set so that each spring load is larger than a sliding friction, occurring between the driven member 132 and the O-ring130, which is namely the sliding force of the driven member 132. As a result, the springs 154 and 158 are not compressed while the valve actuating member 134 and the driven member 132 operate together. Hence, the valve opening degrees of the proportional valve 34 and the proportional valve 37 can be accurately controlled.

The valve actuating member 134, which is of a stepped cylindrical shape, has an external thread on an outer circumference of the valve actuating member 134. The external thread is secured to the internal thread on the bearing part 126. A plurality of legs 153 (four legs in the present embodiment) extending radially outward are provided at an upper end of the valve actuating member 134, and the legs 153 are fitted to a rotor of the motor unit 102. The valve actuating member 134 is rotated by the rotational driving force of the motor unit 102 and converts its rotative force into a translational force. That is, rotating the valve actuating member 134 displaces the valve actuating member 134 in the direction of axis line through a screw mechanism that functions as a "functioning conversion mechanism". As a result, the common valve element 138 is driven in the direction of axis line (i.e., in an opening or closing direction of the proportional valve 34 and the proportional valve 37).

Also, the motor unit 102 is configured as a stepping motor that includes a rotor 172 and a stator 173. The motor unit 102 is configured such that the motor unit 102 supports the rotor 172 in a freely rotatable manner inside a bottomed cylindrical sleeve 170. The stator 173 that houses a magnetizing coil 171 therein is provided on the outer periphery of the sleeve 170. A lower end opening of the sleeve 170 is assembled to the body 104. And the sleeve 170 and the body 104 constitute a body of the first control valve 4.

The rotor 172 is comprised of a rotational shaft 174, formed in a cylindrical shape, and a magnet 176 disposed on the periphery of the rotational shaft 174. In the present embodiment, the magnet 176 is magnetized to 24 poles. An internal space extending across almost the entire length of the motor unit 102 is formed inside the rotational shaft 174. A guide portion 178 extending in parallel with the direction of axis line is provided at a specific position of inner circumferential surface of the rotational shaft 174. The guide portion 178 is used to form a raised part used to be engaged with a rotational stopper (described later). Also, the guide portion 178 is constituted by a single protrusion extending in parallel with the direction of axis line.

The diameter of a lower end of the rotational shaft 174 is slightly reduced, and four guide portions 180 extending in parallel with the direction of axis line are provided on the inner circumferential surface thereof. Each guide portion 180 is formed of a pair of protrusions extending in parallel with the direction of axis line, and the guide portions 180 are provided at every 90 degrees on the inner circumferential surface of the rotational shaft 174. The aforementioned four legs 153 of the valve actuating member 134 are fitted to the four guide portions 180, so that the rotor 172 and the valve actuating member 134 can rotate together, namely, they can rotate as a single unit. It is to be noted here, however, that a relative displacement of the valve actuating member 134 in the rotation direction relative to the rotor 172 is limited to a certain degree but the displacement thereof in the direction of axis line along the guide portions 180 is permitted. In other words, while the valve actuating member 134 rotates together with the rotor 172, the valve actuating member 134 is driven in an opening or closing direction of the common valve element 138.

An elongated shaft 182 is provided, inside the rotor 172, along the axis line of the rotor 172. An upper end of the shaft 182 is press-fitted to a bottom center of the sleeve 170 and thereby the shaft 182 is cantilevered. Also, the shaft 182 extends into an internal space in parallel with the guide portion 178. The shaft 182 is disposed along the same axis line as that of the valve actuating member 134. A guide portion 184, in the shape of a spiral, which extends across almost the entire length of the shaft 182 is formed on the shaft 182. The guide portion 184, which is formed of a coil-shaped material, is fitted on an exterior surface of the shaft 182. An upper end of the guide portion 184 is folded so as to form a stopper 186.

A rotational stopper 188 in the shape of a spiral is rotatably engaged with the guide portion 184. The rotational stopper 188 has a spiral engagement portion 190, which joins with the guide portion 184, and a power-transmitting portion 192, which is supported by the rotational shaft 174. The engagement portion 190 has a shape of a single-turn coil, and the power-transmitting portion 192 extending radially outward is formed connectedly on a lower end of the engagement portion 190. A tip of the power-transmitting portion 192 is joined together with the guide portion 178. That is, the power-transmitting portion 192 abuts against a protrusion of the guide portion 178 and is stopped thereby. Thus, a relative displacement of the rotational stopper 188 in the rotation direction is limited by the rotational shaft 174, whereas the rotational stopper 188 slides along the guide portion 178 and the displacement thereof in the direction of axis line is permitted.

More specifically, the rotational stopper 188 integrally rotates with the rotor 172, and the engagement portion 190 of the rotational stopper 188 is guided along the guide portion 184, so that the rotational stopper 188 is driven along the direction of axis line. It is to be noted here that the range within which the rotational stopper 188 is allowed to be driven in the direction of axis line is limited by the stoppers formed at both ends of the guide portion 178. FIG. 3 illustrates a state where the rotational stopper 188 is stopped at a bottom dead point. As the rotational stopper 188 is displaced upward and then is stopped by the stopper 186, the position at which the rotational stopper 188 stops is a top dead point.

An upper end of the rotor 172 is freely rotatably supported by the shaft 182, whereas a lower end thereof is freely rotatably supported by the bearing part 126. More specifically, a bottomed cylindrical end member 194 is so provided as to close and seal off an upper end opening of the rotational shaft 174, and a part of a cylindrical shaft 196 provided in a central position of the end member 194 is supported by the shaft 182. That is, the bearing part 126 serves as a bearing part at one end side, whereas a sliding portion of the shaft 182 relative to the cylindrical shaft 196 serves as a bearing part at the other end side.

The first control valve 4 configured as described above functions as a control valve of stepping motor driven type capable of regulating the valve opening degree by controlling the drive of the motor unit 102. An operation of the first control valve 4 will be described below in detail.
When the flow rate of refrigerant is to be controlled by the first control valve 4, a not-shown control unit in an automotive air conditioner computes the number of steps for driving a stepping motor according to a preset opening degree and then supplies the drive current (drive pulse) to the magnetizing coil 171. Thereby, the rotor 172 rotates. Also, on one hand, the valve actuating member 134 is rotated, which in turn adjusts the opening degrees of the proportional valve 34 and the proportional valve 37 to preset openings. On the other hand, the rotational stopper 188 is driven along the guide portion 184. As a result, the operating range of each valve element is restricted.

FIG. 3 illustrates a case where the proportional valve 34 is fully open and the proportional valve 37 is closed. The first control valve 4 will be in this state as indicated in FIG. 3 during a special cooling operation, for instance. Thus, during a special cooling operation, the leakage of high-temperature gaseous refrigerant discharged from the compressor 2 into the internal condenser 3 is prevented.

FIG. 4 illustrates a case where both the proportional valve 34 and the proportional valve 37 are open. The first control valve 4 may possibly be in this state as indicated in FIG. 4, depending on a situation, during a normal cooling operation, for instance. That is, as the rotor 172 is rotated and driven in one direction (in the normal direction) from the state shown in FIG. 3, the driven member 132 is displaced in a valve opening direction of the proportional valve 37 with the result that both the proportional valve 34 and the proportional valve 37 are open as illustrated in FIG. 4. More specifically, the valve actuating member 134, which rotates together with the rotor 172, moves to an upper position by a screw mechanism. As a result, while the transmitting member 136 is being stopped by the spring support member 152 at the stopper 160, the valve actuating member 134 displaces the driven member 132 in such a manner as to pull up the driven member 132. FIG. 4 illustrates a state where both the proportional valve 34 and the proportional valve 37 are fully open. The valve opening degree of the proportional valve 37 is regulated in a manner such that the common valve element 138 is driven in a range between when the common valve element 138 is in the position shown in FIG. 3 and when it is in the position shown in FIG. 4. When the valve opening degree of the proportional valve 37 is regulated as described above, the fully open state of the proportional valve 34 is maintained. It is to be noted here that the "fully open state" as used herein indicates that the flow rate of refrigerant is saturated.

FIG. 5 illustrates a case where the proportional valve 34 is closed and the proportional valve 37 is fully open. The first control valve 4 will be in this state during a heating operation, for instance. As the rotor 172 is rotated and driven further in the same direction from the state shown in FIG. 4, the driven member 132 is displaced in a valve closing direction of the proportional valve 34 with the result that the proportional valve 34 is closed and the proportional valve 37 is fully open as shown in FIG. 5. Thus, during a heating operation, the leakage of high-temperature gaseous refrigerant discharged from the compressor 2 into the external heat exchanger 5 is prevented. It goes without saying that the proportional valve 34 can be made open when the rotor 172 is rotated and driven in the reverse direction from the state shown in FIG. 5. The valve opening degree of the proportional valve 34 is regulated in a manner such that the common valve element 138 is driven in a range between when the common valve element 138 is in the position shown in FIG. 5 and when it is in the position shown in FIG. 4.

FIG. 5 illustrates a state where the proportional valve 34 is closed and then the rotor 172 has been rotated by a predetermined amount. In other words, even though the rotor 172 does not stop simultaneously with the proportional valve 34 being closed, the transmitting member 136 gets spaced apart from the spring support member 156 as shown in FIG. 5. As a result, a play mechanism by which to prevent an excessive contact pressure from being applied to the valve seat 122 is provided. Similarly, FIG. 3 illustrates a state where the proportional valve 37 is closed and then the rotor 172 has been rotated by a predetermined amount. In other words, even though the rotor 172 does not stop simultaneously with the proportional valve 37 being closed, the transmitting member 136 gets spaced apart from the spring support member 152 as shown in FIG. 3. As a result, a play mechanism by which to prevent an excessive contact pressure from being applied to the valve seat 146 is provided.

As described above, the proportional valve 34 and the proportional valve 37 are both driven by the common motor unit 102; while the opening degree of one of the proportional valve 34 and the proportional valve 37 is being controlled, the other thereof is kept in a fully open state. Thus, the opening degree of one of those valves can be accurately controlled even though the control valves are configured as a composite valve.

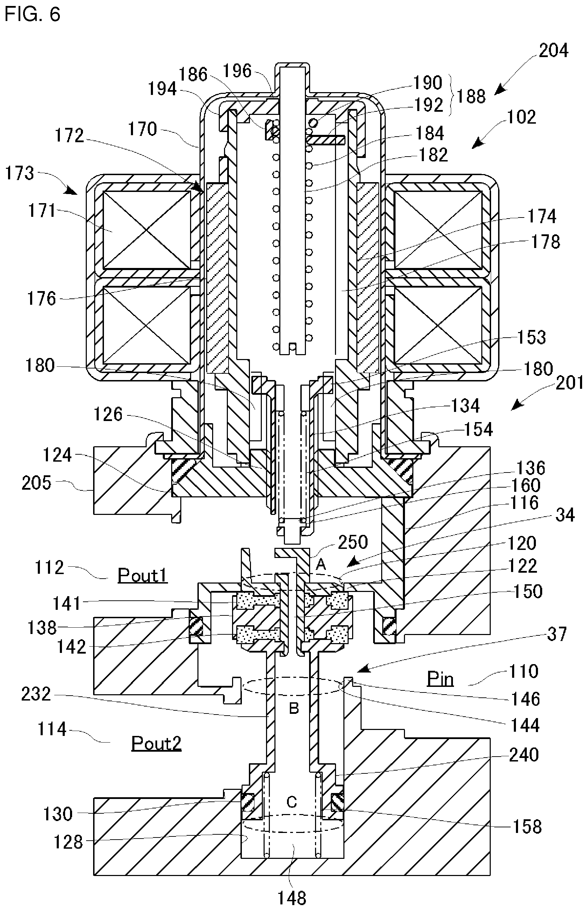

A description is now given of a second embodiment of the present invention. An automotive air conditioner according to the second embodiment differs from that according to the first embodiment in the structure of its control valve. A description is given hereunder centering around structural differences from the second embodiment. Thus, the structural components of the second embodiment closely similar to those of the first embodiment are given the identical reference numerals and the description thereof is omitted as appropriate. FIG. 6 is a cross-sectional view illustrating a structure according to the second embodiment.

In a first control valve 204 according to the second embodiment, the structure of a valve unit 201 differs from the valve unit 101 of the first embodiment. More specifically, a driven member 232 in a body 205 is arranged such that the driven member 232 is positioned upside down as compared to the driven member 132 in the body 104 of FIG. 3. The back pressure chamber 148 of the second embodiment is formed at a bottom side of the body 205 in contrast to the back pressure chamber 148 of the first embodiment formed at a top end side of the body 104 (at a motor unit 102 side).

In other words, the guiding passage 128 of a circular hole shape is formed coaxially with the valve hole 144 at the bottom of the body 205. The driven member 232, the valve actuating member 134, and the transmitting member 136 are disposed coaxially inside the body 205. The driven member 232 is disposed such that the reduced diameter portion of the driven member 232 runs through the valve hole 144. And the common valve element 138 is provided at an upper end of the driven member 232, and a partition member 240 is provided at a lower end thereof.

The partition member 240 is placed in a pressure chamber that communicates with the second lead-out port 114 disposed downstream of the valve hole 144. And the partition member 240 is slidably supported by the guiding passage 128. The O-ring130, which serves as a sealing member, is fitted on the outer circumferential surface of the partition member 240. The spring 158, which functions as a "biasing member", is set between the bottom of the body 205 and the partition member 240.

A plurality of legs (only one of these legs shown in FIG. 6) extend in an upper end of the common valve element 138. In other words, the driven member 232 is configured such that a plurality of legs at the upper end of the driven member 232 slide along the valve hole 120 and such that the partition member 240 at a lower end thereof slide along the guiding passage 128. Thereby, the driven member 232 can stably operate in the direction of axis line.

A bottomed cylindrical conduit member 250 is provided in such a manner as to penetrate the common valve element 138. The conduit member 250 is configured such that an upper end surface of the bottom of the conduit member 250 is contactable with a lower end surface of the transmitting member 136. The communication path 150, which runs through the common valve element 138, is formed inside the conduit member 250. The conduit member 250 together with the reduced diameter portion of the driven member 132 constitutes the conduit section and communicates between the first lead-out port 112 and the back pressure chamber 148. With this structure, the back pressure chamber 148 is constantly filled with a fluid having a downstream-side pressure Pout1 led out from the first lead-out port 112.

In the present embodiment, the effective diameter **A** of the valve hole 120, the effective diameter **B** of the valve hole 144, and the effective diameter **C** of the guiding passage 128 are set equal to each other. Thus, the effect of the refrigerant pressure acting on the common valve element 138 is cancelled. In particular, provision of the O-ring130 ensures the sealing property of a sliding portion in the partition member 240 and also prevents foreign particles or the like from being trapped in the sliding portion.

The transmitting member 136 is inserted to the bottom of the valve actuating member 134. The stopper 160 of the transmitting member 136 is disposed inside the valve actuating member 134. The stopper of the transmitting member 136 is stopped at the bottom of the valve actuating member 134, so that a downward displacement of the transmitting member 136 relative to the valve actuating member 134 (the protrusion amount of the transmitting member 136 from the valve actuating member 134) is restricted. The spring 154, which functions as a "biasing member", is set between an upper end of the valve actuating member 134 and the stopper 160 of the transmitting member 136. Here, the spring 154 biases the stopper 160 in such a direction as to bring the stopper 160 into contact with the bottom of the valve actuating member 134.

The valve actuating member 134 and the driven member 232 are configured such that the valve actuating member 134 and the driven member 232 can be operatively coupled or linked to each other with the transmitting member 136 disposed therebetween. That is, the valve actuating member 134 moves to a lower position and is stopped by the conduit member 250, so that the valve actuating member 134 and the driven member 232 are configured in such a manner as to move together in a downward direction. When both the proportional valve 34 and the proportional valve 37 are open, the driven member 232 and the valve actuating member 134 are integrally displaceable in a stretched state by the biasing forces of the springs 154 and 158. When either the proportional valve 34 or the proportional valve 37 is closed, the driven member 232 and the valve actuating member 134 are displaceable relative to each other in the direction of axis line. That is, as shown in FIG. 6, the transmitting member 136 can be spaced apart from the conduit member 250 when the proportional valve 34 is closed, and therefore the operation linkage between the valve actuating member 134 and the driven member 232 is released. When the proportional valve 37 is closed, the transmitting member 136 compresses the spring 154 with a reaction force arising from the conduit member 250. As a result, the operation linkage between the valve actuating member 134 and the driven member 232 is released.

The net force of the spring 154 and the spring 158 is set so that the net force thereof is larger than the sliding friction between the driven member 232 and the O-ring130 (the sliding force of the driven member 232). Also, the spring load of the spring 154 is set much larger than that of the spring 158. As a result, the spring 154 is not compressed while the valve actuating member 134 and the driven member 232 operate together. Hence, the valve opening degrees of the proportional valve 34 and the proportional valve 37 can be accurately controlled.

The description of the present invention given above is based upon illustrative embodiments. These embodiments are intended to be illustrative only and it will be obvious to those skilled in the art that various modifications could be developed within the technical idea underlying the present invention.

In the above-described embodiments, a description has been given of an example where the port 110 is used as a common lead-in port, into which the refrigerant is introduced, and the ports 112 and 114 are separate lead-out ports from which the refrigerants are led out. In a modification, the ports 112 and 114 may be separate lead-in ports into which the refrigerants are introduced, respectively, and the port 110 may be used as a common lead-out port from which the refrigerant is lead out. In other words, the composite valve may be configured as a control valve where the flow of refrigerant is opposite to that in the above-described embodiments. And a structure may be such that the refrigerant not at an outlet side but at an inlet side of the composite valve is led into the back pressure chamber for a pressure canceling mechanism.

In the above-described embodiments, a description has been given of an example where the guide portion 184 of the shaft 182 and the engagement portion 190 of the rotational stopper 188 in the motor unit 102 are each formed in the shape of a spiral and formed of a coil-shaped material. In a modification, a screw mechanism may be provided where the guide portion 184 of the shaft 182 constitutes the external thread and the engagement portion 190 of the rotational stopper 188 constitutes the internal thread, for instance. A mechanism may be provided whereby the rotation is converted to the translation by both the guide portion 184 and the engagement portion 190.

In the above-described embodiments, a description has been given of an example where the above-described control valves are applied to an air conditioner of an electric-powered vehicle. This, however, should not be considered as limiting and it goes without saying that the control valve according to the preferred embodiments can be applied to an air conditioner of a vehicle provided with an internal-combustion engine and an air conditioner of a hybrid vehicle equipped with both an internal-combustion engine and an electric motor drive. In the above embodiments, an example is described where the control valve of each embodiment controls the flow of the refrigerant as a working fluid but the control valve may be configured as an electrically driven valve that controls the flow of a working fluid other than the refrigerant. In the above-described embodiments, a description has been given of an example where the stepping motor is used as the actuator but motors of other types, a solenoid or the like may be used as the actuator.

- 2: Compressor

- 3: Internal condenser
- 4: First control valve
- 5: External heat exchanger
- 6: Second control valve
- 7: Evaporator
- 8: Accumulator
- 9: Third control valve
- 31, 32, 33, 34, 35, 36, 37: Proportional valve
- 100: Automotive air conditioner
- 101: Valve unit
- 102: Motor unit
- 104: Body
- 110: Lead-in port
- 112: First lead-out port
- 114: Second lead-out port
- 120: Valve hole
- 122: Valve seat
- 128: Guiding passage
- 132: Driven member
- 134: Valve actuating member
- 136: Transmitting member
- 138: Common valve element
- 140: Partition member
- 141: First valve element
- 142: Second Valve element
- 144: Valve hole
- 146: Valve seat
- 148: Back pressure chamber
- 154, 158: Spring
- 172: Rotor
- 173: Stator
- 201: Valve unit
- 204: First control valve
- 205: Body
- 232: Driven member
- 240: Partition member
- 250: Conduit portion

## Claims

1. A control valve (4, 204) comprising:
a common body (104, 205), having a first internal passage and a second internal passage, configured to contain a first valve (34) for controlling an opening degree to regulate a flow of working fluid in the first internal passage and a second valve (37) for controlling an opening degree to regulate a flow of working fluid in the second internal passage;
a common actuator (102) configured to electrically regulate the opening degrees of the first valve (34) and the second valve (37);
a valve actuating member (134) configured to be driven by the actuator (102) in a direction of axis line;
a driven member (132, 232) integrally including a first valve element (141) for opening and closing the first valve (34) and a second valve element (142) for opening and closing the second valve (37), the driven member (132, 232) being configured to be driven in opening and closing directions of the first valve (34) and the second valve (37) in a manner such that the driven member (132, 232) is operatively linked to the valve actuating member (134) and displaceable relative to the valve actuating member (134) in an integrated manner;
a function switching mechanism configured to operatively link the valve actuating member (134) and the driven member (132, 232) to each other, while the opening degree of the first valve (34) or the second valve (37) is under control, and configured to be capable of maintaining the other of the first valve (34) and the second valve (37) in a fully open state while the opening degree of one of the first valve (34) and the second valve (37) is under control; and
a back pressure canceling structure configured to form a back pressure chamber (148) between the driven member (132 ,232) and the body (104, 205) and configured to simultaneously cancel an effect of fluid pressure acting on both the first valve element (141) and the second valve element (142) by delivering the working fluid of either the first internal passage or the second internal passage into the back pressure chamber (148), wherein the body has a first port (110), a second port (112), and a third port (114),
wherein the first internal passage is formed by a passage that joins the first port (110) and the second port (112),
wherein the second internal passage is formed by a passage that joins the first port (110) and the third port (114),
wherein a first valve hole (120) is formed in a part of the first internal passage,
wherein a second valve hole (144) is formed in a part of the second internal passage,
wherein the first valve hole (120), the second valve hole (144), and the valve actuating member (134) are disposed coaxially,
the driven member (132, 232) including:
a valve portion (138) configured such that the first valve element (141) for regulating the opening degree of the first valve (34) by moving toward and away from the first valve hole (120) and the second valve element (142) for regulating the opening degree of the second valve (37) by moving toward and away from the second valve hole (144) are integrally provided, the valve portion (138) being placed between the first valve hole (120) and the second valve hole (144);
a conduit portion configured to be formed connectedly in such a manner as to penetrate the valve portion (138), the conduit portion extending on one side of the direction of axis line; and
a partition member (140, 240) configured to be formed connectedly on an end of the conduit portion opposite to the valve portion (138), the back pressure chamber (148) being formed between the partition member (140, 240) and the body (104, 205), **characterized in that** the control valve (4, 204) further comprising a sealing member (130) provided on a sliding surface between the partition member (140, 240) and the body (104, 205),
the functioning switching mechanism including a biasing member (154, 158) configured to bias the driven member (132, 232) and the actuating member (134) in such a direction as to operatively link the driven member (132, 232) and the actuating member (134),
wherein a biasing force of the biasing member (154, 158) is set such that the biassing force of the biasing member (154, 158) is larger than a sliding force of the sealing member (130), whereby while the opening degree of the first valve (34) or the second valve (37) is under control, the driven member (132, 232) and the valve actuating member (134) are mutually stopped and remain relatively displaceable in an integrated manner, and
wherein, while at least one of the first valve (34) and the second valve (37) is closed, the biasing member (154, 158) is deformed by a reaction force from the driven member (132, 232), and an operation linkage between the driven member (132, 232) and the valve actuating member (134) is released such that the driven member (132, 232) and the valve actuating member (134) are displaceable relative to each other.

2. A control valve (4, 204) according to claim 1, wherein the first port (110) is formed as a common port that communicates with a common passage of the first internal passage and the second internal passage, wherein the second port (112) is located nearer to the actuator (102) than the third port (114),
wherein the third port (114) is spaced apart from the actuator (102) farther than the second port (112), and
wherein the conduit portion extends to one side of the valve portion (138) in such a manner as to cross one side of the first internal passage and the second internal passage, and an end of the conduit portion is open to the other side of the first internal passage and the second internal passage.

3. A control valve (4, 204) according to claim 2, wherein the first port (110) is formed as a lead-in port (110) through which the working fluid is led into,
wherein the second port (112) is formed as a first lead-out port (112) from which the working fluid, which has passed through the first valve hole (120), is led out, and
wherein the third port (114) is formed as a second lead-out port (114) from which the working fluid, which has pass through the second valve hole (144), is led out.

4. A control valve (4, 204) according to claim 2 or claim 3, wherein one end side of the conduit portion extends in such a manner as to cross the first internal passage, and the other end side of the conduit portion has a communication port that communicates with the third port (114), and wherein the partition member (140) forms the back pressure chamber (148) between the partition member (140) and the actuator (102).

5. A control valve (4, 204) according to any one of claim 1 to claim 4, wherein the back pressure canceling structure is achieved such that an effective diameter (A) of the first valve hole (120), an effective diameter (B) of the second valve hole (144), and an effective pressure-receiving diameter (C) of the partition member (140, 240) are each set to a practically identical value.

6. A control valve (4, 204) according to any one of claim 1 to claim 5, wherein a stepping motor including a rotor (172), which is rotated and driven, is used as the actuator (102),
the control valve (4, 204) further comprising a functioning conversion mechanism, which rotates together with the rotor (172), configured to convert a rotative motion of the rotor (172) about the axis line into a translational motion of the valve actuating member (134) in the direction of axis line.

## Patentansprüche

1. Steuerventil (4, 204), das Folgendes umfasst:
einen gemeinsamen Körper (104, 205), der einen ersten inneren Durchlass und einen zweiten inneren Durchlass besitzt, die so konfiguriert sind, dass sie ein erstes Ventil (34) zum Steuern eines Öffnungsgrades zum Regulieren eines Durchflusses von Arbeitsfluid in dem ersten inneren Durchlass und ein zweites Ventil (37) zum Steuern eines Öffnungsgrades zum Regulieren eines Durchflusses von Arbeitsfluid in dem zweiten inneren Durchlass enthalten;
einen gemeinsamen Aktor (102), der konfiguriert ist, die Öffnungsgrade des ersten Ventils (34) bzw. des zweiten Ventils (37) elektrisch zu regulieren;
ein Ventilbetätigungselement (134), das konfiguriert ist, durch den Aktor (102) in Richtung einer Achsenlinie angetrieben zu werden;
ein angetriebenes Element (132, 232), das einteilig ein erstes Ventilelement (141) zum Öffnen und Schließen des ersten Ventils (34) und ein zweites Ventilelement (142) zum Öffnen und Schließen des zweiten Ventils enthält, wobei das angetriebene Element (132, 232) konfiguriert ist, in Öffnungs- und
Schließrichtung des ersten Ventils (34) und des zweiten Ventils (37) in der Weise angetrieben zu werden, dass das angetriebene Element (132, 232) mit dem Ventilbetätigungselement (134) betriebstechnisch verbunden ist und relativ zu dem Ventilbetätigungselement (134) einteilig verlagerbar ist;
einen Funktionsschaltmechanismus, der konfiguriert ist, das Ventilbetätigungselement (134) und das angetriebene Element (132, 232) betriebstechnisch miteinander zu verbinden, während der Öffnungsgrad des ersten Ventils (34) oder des zweiten Ventils (37) gesteuert wird, und konfiguriert ist, das jeweils andere des ersten Ventils (34) und des zweiten Ventils (37) in einem vollständig geöffneten Zustand halten zu können, während der Öffnungsgrad des einen des ersten Ventils (34) und des zweiten Ventils (37) gesteuert wird; und
eine Gegendruckaufhebungsstruktur, die konfiguriert ist, eine Gegendruckkammer (148) zwischen dem angetriebenen Element (132, 232) und dem Körper (104, 205) zu bilden, und konfiguriert ist, gleichzeitig eine Wirkung des Fluiddrucks, der sowohl auf das erste Ventilelement (141) als auch auf das zweite Ventilelement (142) wirkt, durch Liefern des Arbeitsfluids entweder des ersten inneren Durchlasses oder des zweiten inneren Durchlasses in die Gegendruckkammer (148) aufzuheben, wobei der Körper einen ersten Anschluss (110), einen zweiten Anschluss (112) und einen dritten Anschluss (114) besitzt,
wobei der erste innere Durchlass durch einen Durchlass gebildet ist, der den ersten Anschluss (110) mit dem zweiten Anschluss (112) verbindet,
wobei der zweite innere Durchlass durch einen Durchlass gebildet ist, der den ersten Anschluss (110) mit dem dritten Anschluss (114) verbindet,
wobei ein erstes Ventilloch (120) in einem Teil des ersten inneren Durchlasses gebildet ist,
wobei ein zweites Ventilloch (144) in einem Teil des zweiten inneren Durchlasses gebildet ist,
wobei das erste Ventilloch (120), das zweite Ventilloch (144) und das Ventilbetätigungselement (134) koaxial angeordnet sind,
wobei das angetriebene Element (132, 232) Folgendes umfasst:
einen Ventilabschnitt (138), der in der Weise konfiguriert ist, dass das erste Ventilelement (141) zum Regulieren des Öffnungsgrades des ersten Ventils (34) durch Bewegen zu und von dem ersten Ventilloch (120) und das zweite Ventilelement (142) zum Regulieren des Öffnungsgrades des zweiten Ventils (37) durch Bewegen zu und von dem zweiten Ventilloch (144) einteilig vorgesehen sind, wobei der Ventilabschnitt (138) zwischen dem ersten Ventilloch (120) und dem zweiten Ventilloch (144) angeordnet ist;
einen Leitungsabschnitt, der konfiguriert ist, in der Weise verbunden ausgebildet zu sein, dass er in den Ventilabschnitt (138) eindringt, wobei sich der Leitungsabschnitt auf einer Seite der Richtung der Achsenlinie erstreckt; und ein Trennwandelement (140, 240), das konfiguriert ist, an einem Ende des Leitungsabschnitts gegenüber dem Ventilabschnitt (138) verbunden ausgebildet zu sein, wobei die Gegendruckkammer (148) zwischen dem Trennwandelement (140, 240) und dem Körper (104, 205) gebildet ist, **dadurch gekennzeichnet, dass** das Steuerventil (4, 204) ferner ein Dichtungselement (130) umfasst, das auf einer Gleitoberfläche zwischen dem Trennwandelement (140, 240) und dem Körper (104, 205) vorgesehen ist,
wobei der Funktionsschaltmechanismus ein Vorbelastungselement (154, 158) umfasst, das konfiguriert ist, das angetriebene Element (132, 232) und das Betätigungselement (134) in einer Richtung vorzubelasten, dass das angetriebene Element (132, 232) und das Betätigungselement (134) betriebstechnisch verbunden sind,
wobei eine Vorbelastungskraft des Vorbelastungselements (154, 158) in der Weise eingestellt ist, dass die Vorbelastungskraft des Vorbelastungselements (154, 158) größer als eine Gleitkraft des Dichtungselements (130) ist, wodurch, während der Öffnungsgrad des ersten Ventils (34) oder des zweiten Ventils (37) gesteuert wird, das angetriebene Element (132, 232) und das Ventilbetätigungselement (134) gegenseitig angehalten werden und auf einteilige Weise relativ verlagerbar bleiben, und
wobei, während das erste Ventil (34) und/oder das zweite Ventil (37) geschlossen sind, das Vorbelastungselement (154, 158) durch eine Gegenkraft von dem angetriebenen Element (132, 232) verformt wird und ein Arbeitsgestänge zwischen dem angetriebenen Element (132, 232) und dem Ventilbetätigungselement (134) freigegeben wird, derart, dass das angetriebene Element (132, 232) und das Ventilbetätigungselement (134) relativ zueinander verlagerbar sind.

2. Steuerventil (4, 204) nach Anspruch 1, wobei der erste Anschluss (110) als ein gemeinsamer Anschluss ausgebildet ist, der mit einem gemeinsamen Durchlass des ersten inneren Durchlasses und des zweiten inneren Durchlasses kommuniziert, wobei sich der zweite Anschluss (112) näher bei dem Aktor (102) als der dritte Anschluss (114) befindet,
wobei der dritte Anschluss (114) von dem Aktor (102) weiter als der zweite Anschluss (112) entfernt ist, und
wobei der Leitungsabschnitt sich zu einer Seite des Ventilabschnitts (138) in der Weise erstreckt, dass er eine Seite des ersten inneren Durchlasses und des zweiten inneren Durchlasses kreuzt, und ein Ende des Leitungsabschnitts zu der anderen Seite des ersten inneren Durchlasses und des zweiten inneren Durchlasses offen ist.

3. Steuerventil (4, 204) nach Anspruch 2, wobei der erste Anschluss (110) als ein Einleitungsanschluss (110) gebildet ist, durch den das Arbeitsfluid eingeleitet wird,
wobei der zweite Anschluss (112) als ein erster Ausleitungsanschluss (112) gebildet ist, aus dem das Arbeitsfluid, das sich durch das erste Ventilloch (120) bewegt hat, ausgeleitet wird, und
wobei der dritte Anschluss (114) als ein zweiter Ausleitungsanschluss (114) gebildet ist, aus dem das Arbeitsfluid, das sich durch das zweite Ventilloch (144) bewegt hat, ausgeleitet wird.

4. Steuerventil (4, 204) nach Anspruch 2 oder Anspruch 3, wobei sich eine Stirnseite des Leitungsabschnitts in der Weise erstreckt, dass sie den ersten inneren Durchlass kreuzt, und die andere Stirnseite des Leitungsabschnitts einen Kommunikationsanschluss besitzt, der mit dem dritten Anschluss (114) kommuniziert, und wobei das Trennwandelement (140) die Gegendruckkammer (148) zwischen dem Trennwandelement (140) und dem Aktor (102) bildet.

5. Steuerventil (4, 204) nach einem der Ansprüche 1 bis 4, wobei die Gegendruckaufhebungsstruktur in der Weise erzielt wird, dass ein effektiver Durchmesser (A) des ersten Ventillochs (120), ein effektiver Durchmesser (B) des zweiten Ventillochs (144) und ein effektiver Druckaufnahmedurchmesser (C) des Trennwandelements (140, 240) jeweils auf einen im Wesentlichen gleichen Wert eingestellt sind.

6. Steuerventil (4, 204) nach einem der Ansprüche 1 bis 5,
wobei ein Schrittmotor, der einen Rotor (172) enthält, der gedreht und angetrieben wird, als der Aktor (102) verwendet wird,
wobei das Steuerventil (4, 204) ferner einen Funktionsumwandlungsmechanismus umfasst, der sich zusammen mit dem Rotor (172) dreht und konfiguriert ist, eine Drehbewegung des Rotors (172) um die Achsenlinie in eine translatorische Bewegung des Ventilbetätigungselements (134) in Richtung der Achsenlinie umzuwandeln.

## Revendications

1. Vanne de commande (4, 204) comprenant :
un corps commun (104, 205) ayant un premier passage interne et un second passage interne, configuré pour contenir une première vanne (34) pour commander un degré d'ouverture pour réguler un écoulement de fluide de travail dans le premier passage interne, et une seconde vanne (37) pour commander un degré d'ouverture pour réguler un écoulement de fluide de travail dans le second passage interne ;
un actionneur commun (102) configuré pour réguler électriquement les degrés d'ouverture de la première vanne (34) et de la seconde vanne (37) ;
un élément d'actionnement de vanne (134) configuré pour être entraîné par l'actionneur (102) dans une direction de ligne d'axe ;
un élément entraîné (132, 232) comprenant d'un seul tenant un premier élément de vanne (141) pour ouvrir et fermer la première vanne (34) et un second élément de vanne (142) pour ouvrir et fermer la seconde vanne (37), l'élément entraîné (132, 232) étant configurés pour être entraîné dans des directions d'ouverture et de fermeture de la première vanne (34) et de la seconde vanne (37) d'une manière telle que l'élément entraîné (132, 232) est relié fonctionnellement à l'élément d'actionnement de vanne (134) et peut être déplacé par rapport à l'élément d'actionnement de vanne (134) D'une manière intégrée ;
un mécanisme de commutation de fonction configuré pour relier de manière opérationnelle l'élément d'actionnement de vanne (134) et l'élément entraîné (132, 232) l'un à l'autre, tandis que le degré d'ouverture de la première vanne (34) ou de la seconde vanne (37) est sous contrôle, et configuré pour être capable de maintenir l'autre de la première vanne (34) et la seconde vanne (37) dans un état complètement ouvert tandis que le degré d'ouverture de l'une de la première vanne (34) et de la seconde vanne (37) est sous contrôle ; et
une structure d'annulation de contre-pression configurée pour former une chambre de contre-pression (148) entre l'élément entraîné (132, 232) et le corps (104, 205) et configurée pour annuler simultanément un effet d'une pression de fluide agissant à la fois sur le premier élément de vanne (141) et le second élément de vanne (142) en délivrant le fluide de travail du premier passage interne ou du second passage interne jusque dans la chambre de contre-pression (148), dans lequel le corps a un premier orifice (110), un second orifice (112) et un troisième orifice (114),
dans lequel le premier passage interne est formé par un passage qui relie le premier orifice (110) et le deuxième orifice (112),
dans lequel le second passage interne est formé par un passage qui relie le premier orifice (110) et le troisième orifice (114),
dans lequel un premier trou de vanne (120) est formé dans une partie du premier passage interne,
dans lequel un second trou de vanne (144) est formé dans une partie du second passage interne,
dans lequel le premier trou de vanne (120), le second trou de vanne (144) et l'élément d'actionnement de vanne (134) sont disposés coaxialement, l'élément entraîné (132, 232) comprenant :
une partie de vanne (138) configurée de sorte que le premier élément de vanne (141) pour réguler le degré d'ouverture de la première vanne (34) en se rapprochant et en s'éloignant du premier trou de vanne (120) et le second élément de vanne (142) pour réguler le degré d'ouverture de la seconde vanne (37) en se rapprochant et en s'éloignant du second trou de vanne (144) sont prévus d'un seul tenant, la partie de vanne (138) étant placée entre le premier trou de vanne (120) et le second trou de vanne (144) ;
une partie de conduit configurée pour être formée connectée d'une manière en pénétrant dans la partie de vanne (138), la partie de conduit s'étendant d'un premier côté de la direction de ligne d'axe ; et
un élément de séparation (140, 240) configuré pour être formé connecté sur une extrémité de la partie de conduit opposée à la partie de vanne (138), la chambre de contre-pression (148) étant formée entre l'élément de séparation (140, 240) et le corps (104, 205), **caractérisée en ce que** la vanne de commande (4, 204) comprend en outre un élément d'étanchéité (130) prévu sur une surface de coulissement entre l'élément de séparation (140, 240) et le corps (104, 205),
le mécanisme de commutation de fonctionnement comprenant un élément de sollicitation (154, 158) configuré pour solliciter l'élément entraîné (132, 232) et l'élément d'actionnement (134) dans une direction de manière à relier l'élément entraîné (132, 232) et l'élément d'actionnement (134) de manière fonctionnelle,
dans lequel une force de sollicitation de l'élément de sollicitation (154, 158) est établie de telle sorte que la force de sollicitation de l'élément de sollicitation (154, 158) est supérieure à une force de coulissement de l'élément d'étanchéité (130), de sorte que pendant que le degré d'ouverture de la première vanne (34) ou de la seconde vanne (37) est sous contrôle, l'élément entraîné (132, 232) et l'élément d'actionnement de vanne (134) mutuellement arrêtés et restent déplaçables de manière relative d'une manière intégrée, et
dans laquelle, tandis qu'au moins l'une de la première vanne (34) et de la seconde vanne (132, 232) est fermée, l'élément de sollicitation (154, 158) est déformé par une force de réaction provenant de l'élément entraîné (132, 232), et une liaison opérationnelle entre l'élément entraîné (132, 232) et l'élément d'actionnement de vanne (132, 232) est libérée de telle sorte que l'élément entraîné (132, 232) et l'élément d'actionnement de vanne (134) sont déplaçables de manière relative l'un par rapport à l'autre.

2. Vanne de commande (4, 204) selon la revendication 1, dans laquelle le premier orifice (110) est formé sous la forme d'un orifice commun qui communique avec un passage commun du premier passage interne et du second passage interne,
dans laquelle le deuxième orifice (112) est situé plus près de l'actionneur (102) que le troisième orifice (114),
dans laquelle le troisième orifice (114) est espacé de l'actionneur (102) davantage que le deuxième orifice (112), et
dans laquelle la partie de conduit s'étend sur un côté de la partie de vanne (138) de manière à traverser un côté du premier passage interne et du second passage interne, et une extrémité de la partie de conduit est ouverte vers l'autre côté du premier passage intérieur et du deuxième passage interne.

3. Vanne de commande (4, 204) selon la revendication 2, dans laquelle le premier orifice (110) est formé sous la forme d'un orifice d'entrée (110) à travers lequel le fluide de travail est conduit vers l'intérieur,
dans laquelle le deuxième orifice (112) est formé sous la forme d'un premier orifice de sortie (112) à partir duquel le fluide de travail, qui est passé à travers le premier trou de vanne (120), est conduit vers l'extérieur, et
dans laquelle le troisième orifice (114) est formé sous la forme d'un second orifice de sortie (114) à partir duquel le fluide de travail, qui est passé à travers le second trou de vanne (144), est conduit vers l'extérieur.

4. Vanne de commande (4, 204) selon la revendication 2 ou 3, dans laquelle un côté d'extrémité de la partie de conduit s'étend de manière à croiser le premier passage interne, et l'autre côté d'extrémité de la partie de conduit comporte un orifice de communication qui communique avec le troisième orifice (114), et dans laquelle l'élément de séparation (140) forme la chambre de contre-pression (148) entre l'élément de séparation (140) et l'actionneur (102).

5. Vanne de commande (4, 204) selon l'une quelconque des revendications 1 à 4, dans laquelle la structure d'annulation de contre-pression est réalisée de telle sorte qu'un diamètre effectif (A) du premier trou de vanne (120), un diamètre effectif (B) du deuxième trou de vanne (144) et un diamètre effectif de réception de pression (C) de l'élément de séparation (140, 240) sont établis chacun à une valeur pratiquement identique.

6. Vanne de commande (4, 204) selon l'une quelconque des revendications 1 à 5,
dans laquelle un moteur pas-à-pas comprenant un rotor (172), qui est mis en rotation et entraîné, est utilisé comme actionneur (102),
la vanne de commande (4, 204) comprenant en outre un mécanisme de conversion de fonctionnement, qui tourne conjointement avec le rotor (172), configuré pour convertir un mouvement de rotation du rotor (172) autour de la ligne d'axe en un mouvement de translation de l'élément d'actionnement de vanne (134) dans la direction de la ligne d'axe.
